Europäisches Patentamt

European Patent Office

Office européen des brevets

(11) Publication number: **0 369 959**

**A2**

(12) **EUROPEAN PATENT APPLICATION**

(21) Application number: **89850360.2**

(22) Date of filing: **23.10.89**

(51) Int. Cl.⁵: **H04N 7/167**

(30) Priority: **25.10.88 SE 8803814**

(43) Date of publication of application:
**23.05.90 Bulletin 90/21**

(84) Designated Contracting States:
**AT BE CH DE ES FR GB GR IT LI LU NL SE**

(71) Applicant: **SPACENET AB**
**Storholmsgatan 3**
**S-127 48 Skärholmen(SE)**

(72) Inventor: **Jägfors, Ulf**
**Johan Mickelsväg 9**
**S-135 52 Tyresö(SE)**
Inventor: **Ljungdahi, Arne**
**Hanna Paulis gata 39 1 tr**
**S-126 65 Hägersten(SE)**
Inventor: **Fagerlin, Peter**
**Saturnusvägen 12**
**S-141 33 Huddinge(SE)**

(74) Representative: **Moberg, Sture**
**STURE V MOBERG AB Kungstensgatan 48**
**S-113 59 Stockholm(SE)**

(54) **An improved pay-TV-system.**

(57) An improved pay-TV-system, comprising a centrally located obfuscation signal generator, adapted to periodically pass to at least some TV-channels obfuscation signals, and control and communication devices (12) to set which ones of the channels at the respective subscriber where unobfuscated receiving is authorized.

The system comprises:
a centrally located coding device (K) to which a modulated TV-signal from the cable net (10) is passed, and which, within the band width of the TV-signal, via an obfuscation signal generator (13) passes to the modulated TV-signal data for the respective obfuscation signal, such as time, duration and frequency of the obfuscation signal, and,
for each subscriber, a de-coder (AK), comprising a sync unit and a filter, and adapted to receive obfuscation coded signals from the coding device (12), and, in dependence on control signals from the control and communication devices (12) on one hand, and the function of the sync unit on the other hand, to filtrate off the obfuscation signals on the channels where normal receiving is authorized in order to pass to an output terminal (U) only decoded information signals.

FIG. 1

## An improved pay-TV-system

The present invention relates to an improved pay-TV-system and is intended to be used for both star nets and cascade nets or tap nets.

One object of the invention has been to provide a coding device which makes it possible to economically code pay-TV-signals to a plurality of subscribers of the order of from 30 - 40 flats up to 10.000 of flats or more. Further, it shall be possible to equip the system with a complete administration system, and it should be possible to communicate with the various units by means of both the cable-TV-net and via special lines, RDS, and via the telephone net.

Another object of the invention has been to provide a coding device which operates with a high frequency coding of all the desired pay-TV-channels and in which the risk for pirat watching is minimized.

Still another object of the invention has been to provide a coding device which beyond coding and decoding permits the possibility to handle pay-per-programme-functions (PPP-functions).

An additional object of the invention has been to provide a coding device which admits a small influence on the picture and the sound whereby an extremely high quality on the picture and sound is achieved, as compared to other types of coding systems.

To achieve the above recited objects the coding device according to the invention has been designed in such a manner as is defined in the characterizing clause of claim 1.

Generally the invention may be described in such a manner that the coding of radio- or TV-signals may be brought about by adding to the modulated signal obfuscation signals within the band width of the modulated signal. These obfuscation signals may then be filtered off in a receiving equipment (de-coding unit). Simultaneously with the obfuscation signal also a control signal from the coding unit is added. This coding signal is utilized to tell the de-coding unit that an obfuscation is coming in on a predetermined channel. The de-coding unit may filtrate off this obfuscation. In this way an obfuscation signal may be sent out on frequency 1 simultaneously with a control signal that advises on one hand that an obfuscation signal·is coming and on the other hand which frequency the obfuscation has. Then, an obfuscation is sent out on frequency 2 etc.

As an alternative the obfuscation frequencies and the mutual order between them may be sent separately to the de-coding unit which stores them and receives only the control signal in order to know when an obfuscation is coming.

In order to avoid a simple resetting of the signal by means of e.g. a notch-filter, which is tuned to the frequency of the obfuscation signal, different high frequency signals may be used, which are varied to frequency and pulse progress.

The invention will be disclosed in more details below with reference to the accompanying drawings.

Figure 1 is a general diagram showing the principles of the system;

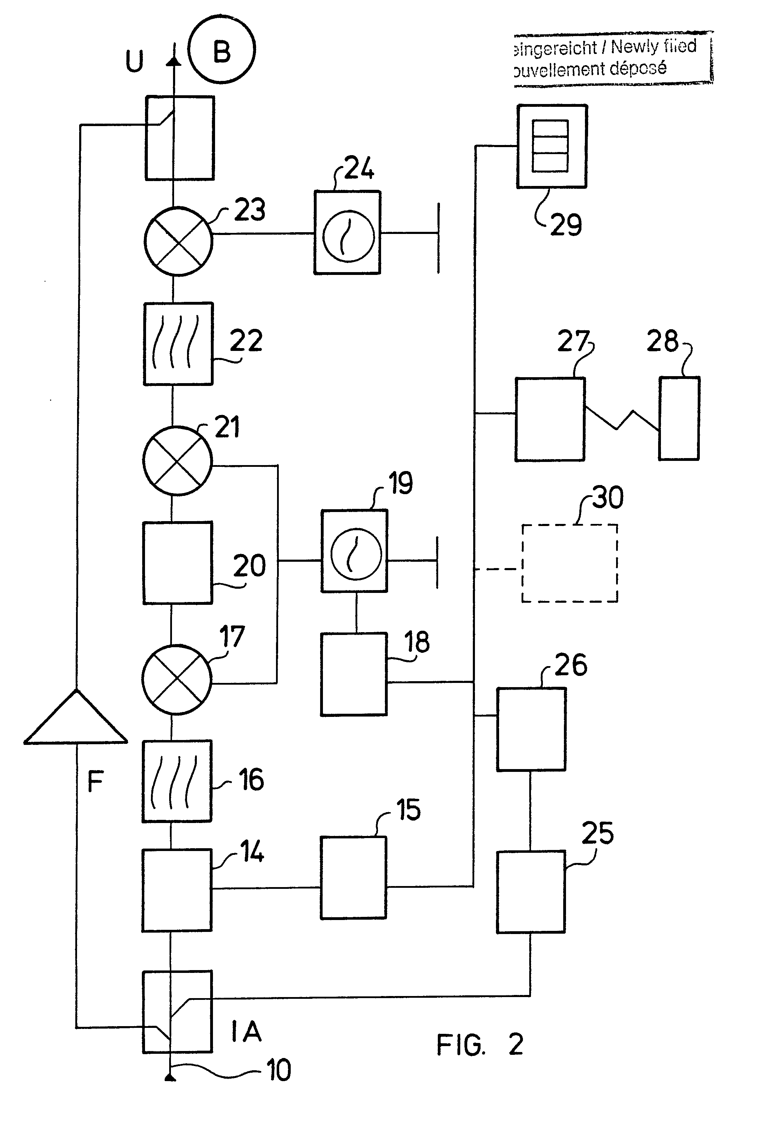

Figure 2 is a more detailed diagram illustrating one embodiment of the device according to the invention, picked as an example.

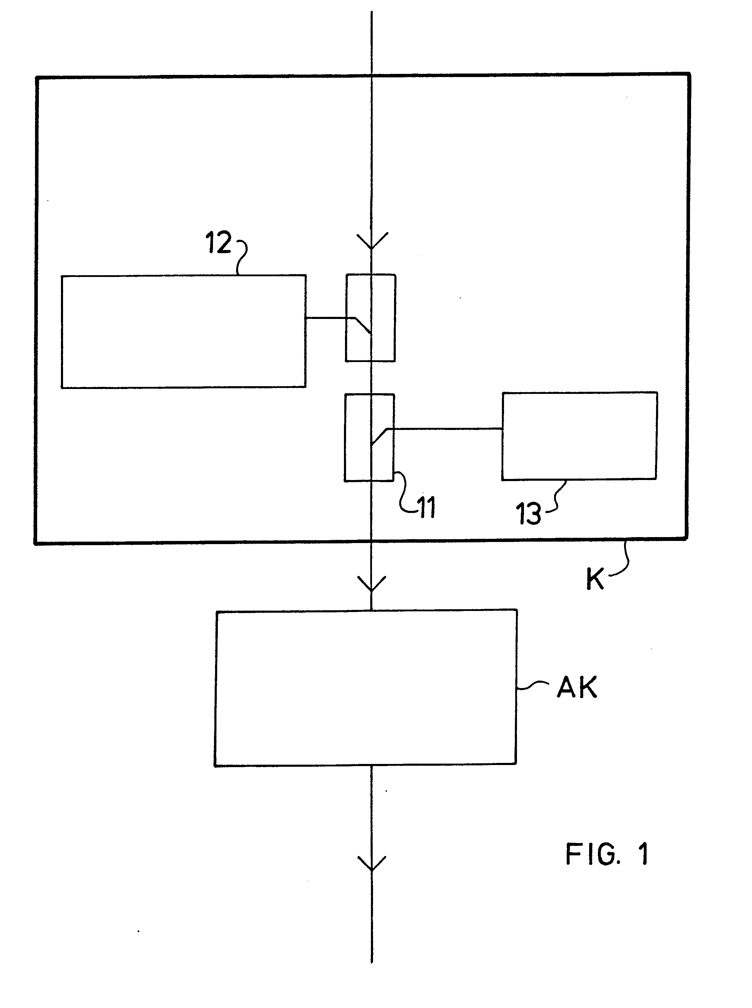

According to fig. 1 the system comprises a suitably located coding device, generally denoted K, and a plurality of de-coding devices AK, viz. one for each one of the subscribers.

Modulated signals from a cable-TV-net 10 are fed to the coding device K, and in the coding device K there is added, via an input means 11, an obfuscation signal within the band width of the modulated signal, from an obfuscation signal generator 13.

In the example the necessary control and communication takes place over the coding device K, viz. in a control and communication unit 12, which operates over the cable-TV-net. This unit comprises the obfuscation signal generator 13 the signals from which are passed to the net 10 to tell the de-coding unit AK that an obfuscation on a predetermined channel is coming within short, and which frequency this obfuscation has, to permit the de-coding device AK to filtrate off this obfuscation.

In the device shown modulated signals from the cable-TV-net 10 are fed in via an ordinary antenna terminal A and are fed on one hand through the above mentioned coding device K, and on the other hand to an amplifier F from which an amplified signal may be re-entered in a terminal U. By this arrangement a by-pass function is achieved which makes it possible to insert the device before or after a video tape-recorder or any other auxilliary apparatus, not shown.

From an inlet tap terminal IA the signal is passed to a tuner 14 which selects the incoming signals and mixes these down to a middle frequency. To the tuner 14 there is connected a control frequency generator 15 which cooperates with the tuner 14 in order to select the momentarily desired TV-channel in the tuner 14.

The signal for the respective TV-channel, mixed down to a middle frequency, is passed from the tuner 14 to a band pass filter 16 for a further selection of the signal in question.

In a mixer 17 the signal from the band pass filter 16 is mixed with a signal from a PLL-circuit 18 (phase lock loop) with an appurtenant oscillator 19, and more precisely to such a frequency that the obfuscation may be filtered off in a filter 21, preferably a notch filter. A further mixer 21 then restores the frequency that came in to the mixer 17 from the band pass filter 16. Non-desired frequencies, beyond the middle frequency, are then filtered off in a band pass filter 22.

The middle frequency is passed to still another mixer 23, and the desired TV-channel from the de-coding unit is picked by means of an oscillator 24.

A communication unit 25 receives from the cable net information with respect to actual obfuscation algoritm, frequency stabilisation and subscriber addressing, and could also send back information regarding among other things PPP-status etc.

A processor 26 controls the de-coding unit with respect to among other things frequency setting, communication, addressing and de-coding as well as PPP-functions.

Over an IR-receiver 27 channels and program are controlled from a remote controller 28. A display 29 shows the picked channel, PPP-function etc, and in the example shown the system is provided with a card reader 30 which may control pay-TV-functions via suitable magnet cards or the like.

The de-coding device may also be equipped with a PPP value memory which, on control from a central unit, may be loaded down into the de-coding device; then, by means of the remote control, the subscriber may count off the value loaded down into the memory.

Within the scope of the invention there is also comprised a simplified method for filtering off an obfuscation signal directly on the incoming frequency, controlled to its filtering principles by the same control signals that have been described above.

It should be noted that it is within the scope of the invention, as an alternative, to send the obfuscation fequencies and the mutual order between them separately to the de-coding device, to store the same therein, which device then only receives sync-signals in order to know when the obfuscation is coming.

## Claims

1. An improved pay-TV-system, comprising at least one preferably centrally located obfuscation signal generator, which is adapted to periodically pass to at least some TV-channels obfuscation signals which render difficult or prevent normal receiving, and preferably centrally located control and communication devices (12) to set which one or which ones of the channels at the respective subscriber where unobfuscated receiving is authorized, **characterized in**
a preferably centrally located coding device (K) which is common to all subscribers and to which a modulated TV-signal from the cable net (10) is passed, and which is adapted to pass to the modulated TV-signal an obfuscation signal within the band width of the modulated TV-signal, and where there to the coding device (K) belongs an obfuscation generator (13) which is adapted to emit signals denoting date for the respective obfuscation signal, such as time, duration and frequency of the obfuscation signal,
and, for each subscriber, a de-coder (AK), comprising a sync unit and at least one filter, and adapted to receive obfuscation coded signals from the coding device (12), and, in dependence on control signals from the control and communication devices (12) on one hand, and the function of the sync unit on the other hand, to filtrate off the obfuscation signals on the channels where normal receiving is authorized in order to pass to an output terminal (U) only de-coded information signals.

2. A system as claimed in claim 1, **characterized in that** the de-coding unit (AK) is completed by one or more communication units (25, 27, 28, 30) to permit PPP-functions and the like.

3. A system as claimed in claim 1 or 2, **characterized in that** each de-coding device (AK) is provided with a by-pass line, preferably comprising an amplifier (F), to achieve a by-pass function.

FIG. 1

FIG. 2